# EUROPÄISCHE PATENTSCHRIFT

(11) **EP 1 045 300 B1**
(45) Veröffentlichungstag und Bekanntmachung des Hinweises auf die Patenterteilung: **04.08.2004**
(21) Anmeldenummer: 00104631.7
(22) Anmeldetag: 03.03.2000
(51) Int. Cl.: G05B 9/02, G05B 19/10

(54) **Bedienelement zum Schalten und Steuern elektrisch bedienbarer Geräte mit einer Blende**
Operating element for switching and controlling electrically operated devices with a screen
Elément de commande pour commuter et contrôler des appareils controlâbles électriquement avec un écran

(30) Priorität: 16.04.1999 DE 19917191
(43) Veröffentlichungstag der Anmeldung: 18.10.2000
(73) Patentinhaber: Preh GmbH, 97616 Bad Neustadt a.d. Saale (DE)
(72) Erfinder: Küchler, Wolfgang, 97645 Ostheim (DE)
(74) Vertreter: Dietrich, Barbara

(56) Entgegenhaltungen:
- EP-A- 0 675 600
- EP-A- 0 841 521

## Beschreibung

Die Erfindung betrifft ein Bedienelement zum Schalten und Steuern elektrisch bedienbarer Geräte mit einer Blende nach dem Oberbegriff des Patentanspruchs 1.

Bei vielen elektrischen Geräten, insbesondere bei Haushaltsgeräten, bestehen Blenden, an denen die Bedienelemente angebracht sind, aus Glas, Metall, Kunststoff usw.. Diese Blenden sind häufig als Frontblenden ausgeführt. Dabei weisen diese Frontblenden häufig Durchbrüche zur Aufnahme der Bedienelemente auf. Oft entstehen neben den Spalten, die sich zwischen den Durchbrüchen und den Bedienelementen bilden, auch Spalte zwischen den Bedienelementen und der Frontblende selbst.
Eine solche Front- bzw. Bedienblende mit eingebauten Bedienelementen für Haushaltsgeräte zeigt die DE 40 08 827 A1 auf. Nachteilig dabei ist, dass eine einfache Reinigung der Front- bzw. Bedienblende sehr schwierig ist und der Schmutz zwischen den Durchbrüchen und den Bedienelementen trotz Reinigung der Blende häufig verbleibt. Außerdem ist die Bearbeitung der Frontblende, d. h. das Einbringen von Durchbrüchen, oft sehr aufwendig und teuer.

Eine durchbruchfreie, leicht zu reinigende Frontblende offenbart die EP 0841 521 A2. Hierbei wird jedoch auf separate Bedienelemente verzichtet. Diese sind als Betätigungsbereiche in der Frontblende integriert. Die Funktionsbetätigung erfolgt durch direkten punktuellen Druck auf die Frontblende.

Die Aufgabe der Erfindung besteht daher darin, ein Bedienelement aufzuzeigen, das eine einfache Reinigung der Blende gewährleistet und zudem eine Bearbeitung der Blende unnötig wird.

Gelöst wird die Aufgabe durch die Merkmale des Patentanspruchs 1.

Dabei liegt der Erfindung die Idee zugrunde, einen Träger zur Aufnahme des Bedienelementes auf eine Blende aufzukleben. Im Bedienelement sind Mittel untergebracht, die eine indirekte Bedienungsübertragung realisieren, wobei die elektrische Auswertung der Bedien- bzw. Betätigungsfunktionen durch hinter der Blende angebrachte Mittel erfolgt. Es entfallen somit direkte mechanische Übertragungselemente, die bekanntermaßen einen Durchbruch durch die Blende benötigen. Dadurch werden die ungewollten Spalte zwischen der Blende und den Übertragungselementen der Bedienelemente vermieden. Die Spalte zwischen der Blende und den Bedienelementen sind nach Abzug der Bedienelemente von den Trägern leicht reinigbar, da diese Spalte dann nicht mehr existent sind.

Vorteilhafte Weiterbildungen sind in den Unteransprüchen angegeben.

So kann der Träger vorzugsweise ein Kunststoffträger sein, der eine topfförmige, mittige Lagerung für das Bedienelement besitzt. In einer anderen Variante kann das Bedienelement am Träger außen gelagert sein. In vorteilhafter Weise kann das Bedienelement verschieden ausgeführt sein. Die Bedienelemente, beispielsweise Drehknöpfe, Taster, Schalter usw. sind dabei modular aufgebaut und beinhalten notwendige Rasten, mechanische Anschläge oder die, die Bedienfunktion auslösenden elektrischen Bauelemente. Dabei sind herkömmliche Blenden wie beispielsweise Frontblenden verwendbar.
Es können aber auch vollständige Drehschalter bzw. Taster als separate, von einer Frontblende unabhängige Komponente mit dieser indirekten Betätigung ausgestattet werden.

Anwendung finden diese Bedienelemente vorzugsweise in Haushaltsgeräten wie Herd, Spülmaschine, Waschmaschine, Mikrowelle usw. Aber auch eine Nutzung in Bedienpulten von Anlagen, wie beispielsweise von Kraftwerksanlagen und auf Schiffen, ist möglich.

Anhand von Ausführungsbeispielen mit Zeichnung soll die Erfindung näher erläutert werden. Es zeigen:
- Figur 1: eine Draufsicht auf eine Frontblende eines elektrischen Gerätes.
- Figur 1a: eine Schnittdarstellung im Schnitt A-A der Frontblende mit erfindungsgemäßem Bedienelement.
- Figur 2: die Schnittdarstellung A-A der Frontblende mit dem erfindungsgemäßen Bedienelement und einem piezoelektrischen Sensor.
- Figur 3: die Schnittdarstellung A-A der Frontblende mit dem erfindungsgemäßen Bedienelement und einem optoelektronischen Sensor.
- Figur 4: die Schnittdarstellung A-A der Frontblende mit dem erfindungsgemäßen Bedienelement und einem magnetischen Sensor.
- Figur 5: die Schnittdarstellung A-A der Frontblende mit dem erfindungsgemäßen Bedienteil und einem Hall-Sensor.
- Figur 6: die Schnittdarstellung A-A der Frontblende mit dem erfindungsgemäßen Bedienelement als kapazitiver Winkelsensor.
- Figur 7: eine Schnittdarstellung A-A der Frontblende mit dem erfindungsgemäßen Bedienelement in Außenlagerung.

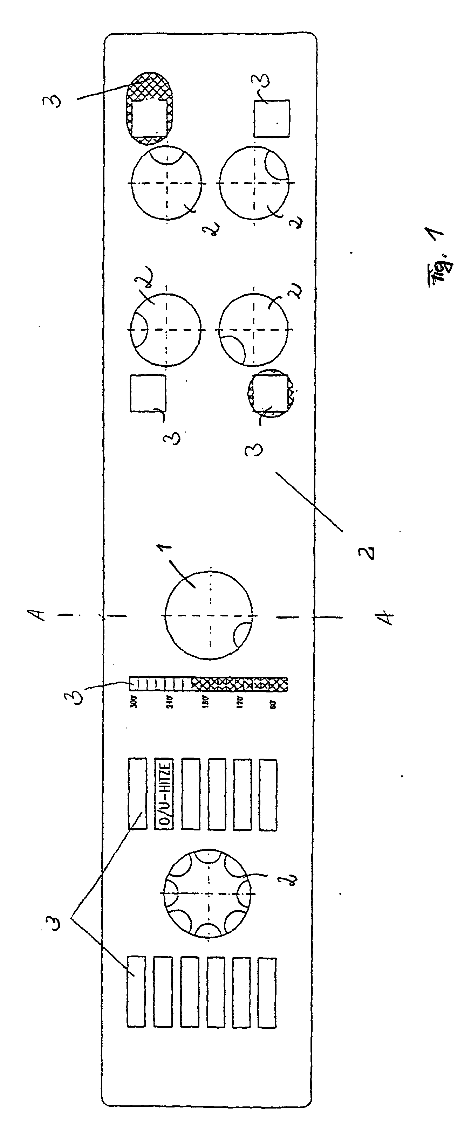

In Figur 1 sind Bedienelemente 1, eine Blende 2 als vorzugsweise durchbruchfreie Frontblende eines nicht näher dargestellten elektrischen Gerätes sowie aufgebrachte bedruckte Folien 3 in Draufsicht dargestellt. Die Frontblende 2 kann dabei aus herkömmlichen Materialien, wie Glas, Kunststoff oder Metall bzw. deren Beschichtungen bestehen. Die Bedienelemente 1 sind beispielsweise Drehschalter, Schalter, Taster usw. Die aufgedruckten Folien 3 dienen in bekannter Art und Weise zur Anzeige der Funktionsauswahl.

Der allgemeine Aufbau des Bedienelementes 1 im Zusammenwirken mit der in deisem Bereich durchbruchfreien Frontblende 2 ist in Figur 1 a im Schnitt A-A dargestellt. Auf der Frontblende 2 sind mehrere, vorzugsweise aus Kunststoff bestehende Träger 4, zur Aufnahme der aufsteckbaren Bedienelemente 1 aufgeklebt. Der Kunststoffträger 4 besteht dabei aus einem topfförmigen Aufnahmeteil 4.1, dessen untere Seite auf die Frontblende 2 geklebt ist. Das Bedienelement 1 weist ein Oberteil 11 auf, das über eine Halterung 12 in das Aufnahmeteil 4.1 des Kunststoffträgers 4 greift.

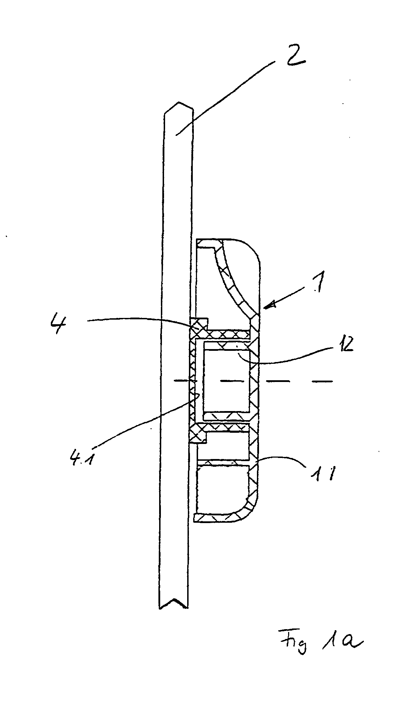

In Figur 2 ist eine erste Variante des Betätigungselementes 1 als piezosensorisches Betätigungselement dargestellt. Zusätzlich zu denen in Figur 1 a dargestellten und bezeichneten Einzelteilen weist das Bedienelement 1 vorzugsweise in seinem oberen Bereich 13 eine Art Hammer 14 mit einer Betätigungsnocke 14.1 und einem Druckgeber 14.2 auf. Dieser Hammer 14 klopft bei Betätigung des Bedienelementes 1 auf die Frontblende 2. Ein hinter der Frontblende 2 befindlicher Piezo-Sensor 5 generiert durch den Kraftimpuls des Hammers 14 auf die Frontblende 2 einen Spannungsimpuls, der von einer nachgeschalteten Auswerteschaltung aufgenommen und aus dem in bekannter Art und Weise die Funktionsauswahl definiert wird.
Ist das Bedienelement 1 ein Drehschalter, kann die Drehrichtung dadurch erkannt werden, dass ein weiterer um 180° im Oberteil versetzter Hammer (nicht dargestellt) auf die Frontblende 2 schlägt. Dabei schlägt z. B. bei Drehrichtung rechts der Hammer 14 vor dem zweiten Hammer auf die Frontblende 2 und bei Drehrichtung links der zweite Hammer vor dem Hammer 14. Die Drehgeschwindigkeit wird aus dem Impulsabstand der so erzeugten Spannungsimpulse ermittelt, die Drehrichtung aus der Phasenlage dieser beiden Spannungsimpulse zueinander. Der für das Halten des Kunststoffträgers 4 verwendete Klebstoffmuss dabei einerseits jedoch eine gewisse Festigkeit (Stabilität) bieten, darf aber andererseits auf die Verbiegung des Piezo-Sensors 5 keinen Einfluss haben.
Vorteilhaft bei Drehschaltern als Bedienelement 1 ist, im Drehbereich hinter der Frontblende 2 mehrere Piezo-Sensoren 5 anzubringen, wodurch die Ermittlung der richtigen Funktionsauswahl verbessert wird. Es ist aber auch möglich, mit nur einem Piezo-Sensor auszukommen, wobei bei Verdrehung des Bedienelementes 1 unterschiedlich große Spannungsimpulse im Piezo-Sensor 5 erzeugt werden, die dann unterschiedliche Spannungsimpulshöhen besitzen und unterschiedliche Funktionen definieren.
Bei Tastern als Bedienelement 1, die meistens dann Anwendung finden, wenn ein Gerät entweder zugeschaltet oder abgeschaltet wird, reicht ein einfacher Spannungsimpuls für die Definierung der ausgeählten Funktion aus.

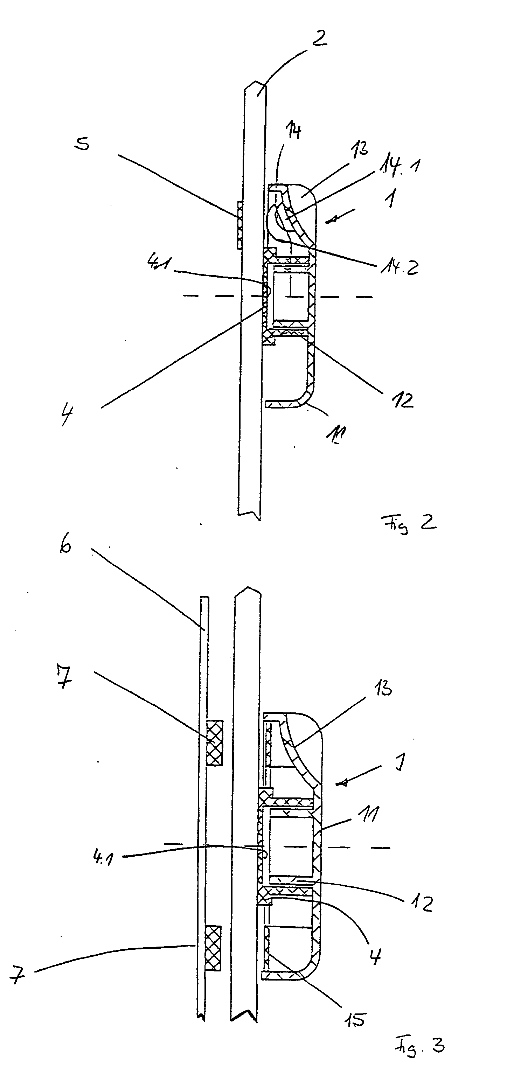

In Figur 3 ist das Bedienelement 1 als optoelektronisches Bedienelement dargestellt. Das Bedienelement 1, hier als Drehschalter, ist auf der, der Frontblende 2 zugewandten Seite mit einer Bahn 15 mit vorzugsweise abwechselnden schwarzen und weißen Flächen bedruckt. Hinter der Frontblende 2 ist ein optoelektronischer Sensor 7, vorzugsweise eine Fotodiode, unterhalb der Kreisförmigen Bahn 15 angeordnet. Bei Betätigung des Bedienelementes 1 erkennt der optoelektronische Sensor 7 die Farbübergänge und liefert entsprechende auswertbare elektrische Spannungssignale.
Durch die Verwendung eines zweiten optoelektronischen Sensors 8 wird in einfacher Weise neben der Drehgeschwindigkeit auch die Drehrichtung des Bedienelementes 1 bestimmt, die durch 2 nebeneinander liegende konzentrisch bedruckte Kreisförmige Bahnen 15 erkennbar ist. Die optoelektronischen Sensoren 7, 8 können auch als IR-Sensoren ausgeführt sein, wobei die Bedruckung am Bedienelement 1 entfällt und statt dessen abgeschrägte Reflektionsflächen aufgebracht sind.

Bei Verwendung eines Drehtasters als Bedienelement 1 sind die Kreisbahnen 15 derart anzubringen, dass je Tastung eine Verstellung der bedruckten Kreisbahnen 15 zu den optoelektronischen Sensoren 7, 8 erfolgt.

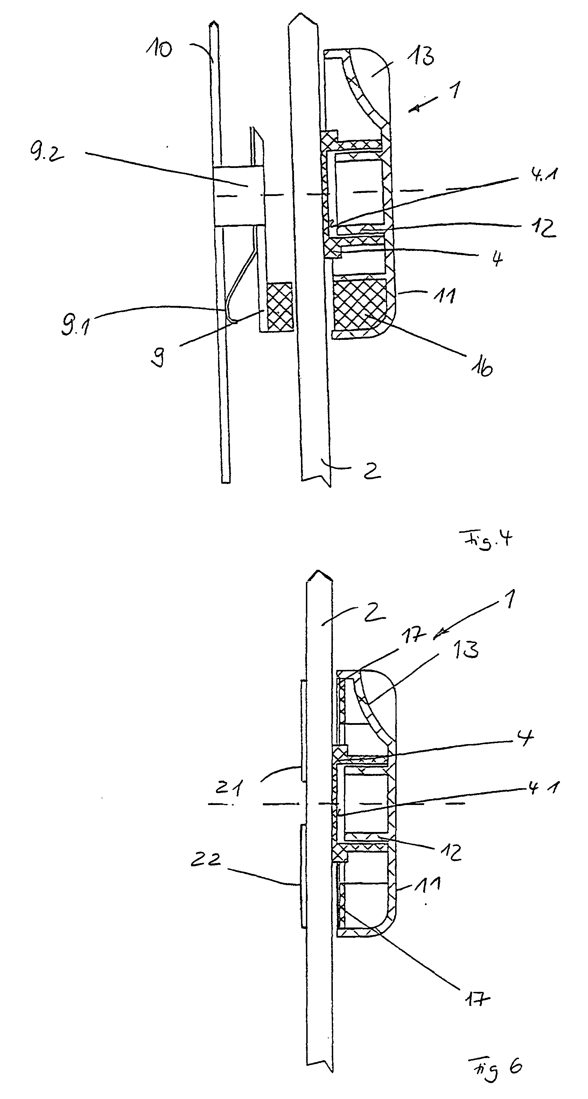

In Figur 4 ist das Bedienelement 1 als magnetisches Bedienelement dargestellt. Im Bedienelement 1 sind dazu ein Kleinmagnet 16 oder magnetisierte Polräder (nicht dargestellt) unterhalb des Oberteils 11 zur Frontblende 2 weisend angebracht. Hinter der Frontblende 2 ist beispielsweise ein mit dem Kleinmagneten 16 magnetisch gekoppelter Magnet 9 alsachsenloses Potentiometer angebracht, der einen Schleifer 9.1 auf einer Leiterplatt 10 mit verstellt. Auf der Leiterplatte 10 ist eine Potentiometerbahn (nicht näher dargestellt) aufgedruckt, auf der der Schleifer 9.1 federnd geführt wird. Eine Federträgerführung 9.2 ist gleichfalls auf bzw. in der Leiterplatte 10 integriert und mit dem Schleifer 9.1 sowie dem Magneten 9 verbunden. Bei Betätigung des Bedienelementes 1 als Drehschalter wird der Magnet 9 auf der Leiterplatte 10 mit dem Kleinmagneten 16 verstellt. Dabei werden unterschiedliche Spannungssignale ähnlich einem Potentiometerausgang erzeugt. Die Drehrichtungserkennung lässt sich aus dem Anstieg oder dem Abfall der letzten Spannungssignale zueinander ermitteln, da durch Verstellung des Schleifers 9.1 auf der Potentiometerbahn unterschiedliche Widerstände und damit unterschiedliche Spannungssignale abgegriffen werden.

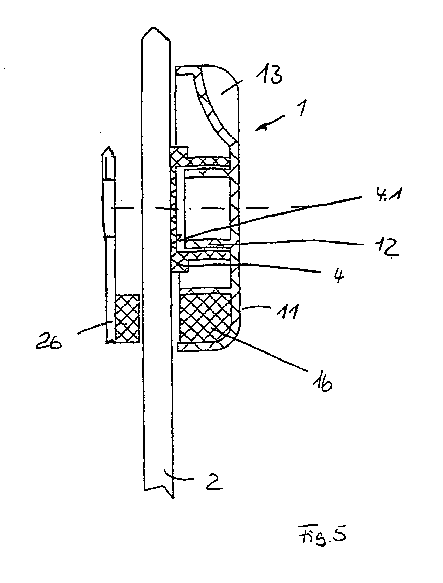

In Figur 5 weist das Bedienelement 1 unterhalb der Frontplatte 2 einen Hall-Sensor 26 auf, dem dann, wenn das Bedienelement 1 mit dem Kleinmagneten 16 betätigt wird, der Wirkungsbereich des Kleinmagneten 16 entzogen wird. Gemäß dem Hall-Effekt werden je nach Stellung/ Abstand des Kleinmagneten 16 zum Hall-Sensor 26 dann am Ausgang des HallSensors 26 unterschiedliche Signale erzeugt, die die gewünschte Funktionsauswahl definieren. Auch hierbei sind zwei Hall-Sensoren 26 vorzusehen, wenn neben der Drehgeschwindigkeit auch die Drehrichtung des Bedienteils 1 bestimmt werden soll. Die erzeugten Signale der Hall-Sensoren 26 ( als Pärchen) sind dann beispielsweise gegeneinander phasenverschoben.

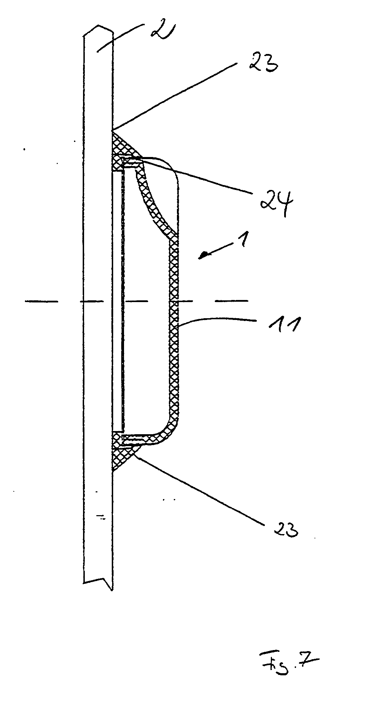

Eine weitere Variante des Bedienelementes 1 ist in Figur 6 dargestellt. Hierbei ist am drehbar gelagerten Bedienelement 1 eine elektrisch leitende Bahn 17 an der der Frontblende 2 zugewandten Seite aufgebracht. Hinter der Frontblende 2 sind vorzugsweise zwei weitere Bahnen 21, 22 als Elektroden direkt an der Frontblende 2 aufgebracht. Das Bedienelement 1 arbeitet dann in bekannter Art und Weise wie ein kapazitiver Winkelmesser durch Schaffung unterschiedlicher Gesamtkapazitäten, aus dem sich die Drehrichtung sowie die Drehgeschwindigkeit durch unterschiedliche Spannungssignale ermitteln lassen.
Eine weitere Möglichkeit besteht darin, die Bahnen 21, 22 auf eine zusätzliche Leiterplatte (nicht dargestellt) aufzudrucken und hinter der Frontblende 2 anzubringen.

In den vorbeschriebenen Ausführungsformen sind die Bedienelemente 1 am Träger 4 mittig gelagert und gehalten. Es besteht jedoch auch die Möglichkeit, einen Träger 23 zur Aufnahme des Bedienelementes 1 derart zu gestalten, dass das Bedienelement 1 außen gelagert wird (Figur 7). Dabei befindet sich eine Halterung 24 als ein Rastoberteilhalteelement außerhalb des Oberteils 11 des Bedienelementes 1. Die Halterung 24 besitzt vorzugsweise ein gummiartiges Material, wodurch beim Anbringen eines zusätzlichen Überlaufschutzes 25 um den Träger 23 und die Halterung 24 ein geräuscharmes Verdrehen ermöglicht wird. Durch den Überlaufschutz 25 wird das Verschmutzen zwischen dem Oberteil 11 des Bedienelementes 11 und der Frontblende 2 vermieden.

Wie bereits ausgeführt, werden die von den verschiedenen Bedienelementen 1 erzeugten Spannungssignale auf eine hier nicht näher dargestellte, aber beispielsweise in der EP 0841 521 A2 näher ausgefühten Auswerteschaltung geführt, die mit einer zusätzlichen Anzeigeeinheit und/oder mit Leuchtelementen (nicht dargestellt) unter den bedruckten Folien 3 sowie mit einer nicht näher dargestellten Funktionsauswahl- und -steuerstufe elektrisch verbunden ist. In vorteilhafter Weise kann die Funktion eines Bedienelementes 1 in seinen Dynamikwerten, seinen Endwerten und Einschaltwerten (analoge oder digitale Signalverarbeitung) etc. durch ein nachgeschaltetes Programm in der Auswerteschaltung individuell programmiert werden, wodurch das Bedienelement 1 einen modularen Aufbau erhält. Dabei kann festgelegt werden, daß beispielsweise eine Winkelverdrehung des Bedienelementes 1 von 5° einer Temperaturerhöhung von 10°C und bei einem anderen Bedienelement 1 eine Temperaturerhöhung von nur 5°C entspricht.

Um eine genaue Zuordnung der griffseitig angebrachten Mittel 14, 15, 16, 17 zu den hinter der Blende 2 angeordneten Mitteln 5, 6, 7, 8, 9, 21, 22 beim Wiederaufstecken des Bedienelementes 1 sicher zu stellen, beipielsweise nach einer Reinigung, können Zwangsführungen im Aufnahmeteil 4.1 des Trägers 4 vorgesehen werden ( nicht näher dargestellt). Dementsprechend weist die Halterung 12 ein notwendiges Gegenstück auf ( nicht näher dargestellt). Dabei kann die Zwangsführung im Aufnahmeteil 4.1 so ausgestaltet sein,dass nur in einer vorbestimmten Stellung des Bedienelementes 1 dieses abgezogen werden kann. Damit wird vermieden, dass das Bedienelement 1 in Funktionsstellung vom Träger 4 getrennt wird.
Zur Vermeidung eines möglichen Abfalls des Bedienelementes 1 vom Träger 4 besitzt die Halterung 12 beispielsweise eine konisch zulaufende Verjüngung, mit der die Halterung 12 in das Aufnahmeteil 4.1 hineingedrückt wird. Bedingt durch das vorzugsweise gummiartige Material der Halterung 12, 24 wird die Halterung 12 im Aufnahmeteil 4.1bzw. im Träger 23 nach definierter Lage pressgepasst, so dass nur durch Aufbringen einer bewust angreifenden Kraft das Bedienelement 1 aus dem Träger 4, 23 abgezogen bzw. gelöst werden kann. Es kann aber auch eine einfache Gewinderille im Aufnahmeteil 4.1 bzw. am Träger 23 und an der Halterung 12,24 vorgesehen werden.

## Patentansprüche

1. Bedienelement für elektrisch bedienbare Geräte mit einer Frontblende, aufweisend ein Oberteil (11) und eine daran befestigte Halterung (12), **dadurch gekennzeichnet, dass** ein Träger (4,23) zur Aufnahme der Halterung (12,24) des aufsteckbaren und von der Halterung (12,24) wieder ablösbaren Bedienelementes (1) auf der durchbruchfreien Frontblende (2) aufgeklebt ist,
im Bedienelement (1) Mittel (14,15,16,17) für eine indirekte Betätigungsübertragung angebracht sind, und
hinter der Frontblende (2) Sensoren (5,6,7,8,9,21,22) zur indirekten Betätigungsauswertung angeordnet sind, die mit den Mitteln (14,15,16,17) im Bedienelement (1) eine konstrukive und elektrisch zusammenwirkende Einheit bilden.

2. Bedienelement nach Anspruch 1, **dadurch gekennzeichnet, dass** der Träger (4) ein Kunststoffträger ist.

3. Bedienelement nach Anspruch 1 oder 2, **dadurch gekennzeichnet, dass** das Bedienelement (1) durch die Halterung (12) im Träger (4) mittig gelagert ist.

4. Bedienelement nach Anspruch 1 oder 2, **dadurch gekennzeichnet, dass** das Bedienelement (1) durch die Halterung (23) am Träger (24) Außen gelagert ist.

5. Bedienelement nach einem oder mehreren der Ansprüche 1 bis 4, **dadurch gekennzeichnet, dass**
das Mittel (14) mindestens ein hammerartiges Element ist, dem mindestens ein Piezo-Sensor (5) hinter der Frontblende (2) anliegend zugeordnet ist.

6. Bedienelement nach einem oder mehreren der Ansprüche 1 bis 4, **dadurch gekennzeichnet, dass**
das Mittel (15) eine farbig kodierte Bahn ist, die an der zur Frontblende (2) weisenden Seite angeorndet ist, wobei mindestens ein optoeelektronischer Sensor (7,8) hinter der Frontblende (2) angebracht ist.

7. Bedienelement nach einem oder mehreren der Ansprüche 1 bis 4, **dadurch gekennzeichnet, dass**
das Mittel (16) ein magnetisiertes Element ist, das mit einem hinter der Frontblende (2) befindlichen Hall-Sensor (26) ein achsenloses Potentiometer bildet.

8. Bedienelement nach einem oder mehreren der Ansprüche 1 bis 4, **dadurch gekennzeichnet, dass**
das Mittel (16) ein magnetisiertes Element ist, das mit einem hinter der Frontblende (2) befindlichen Magneten (9), einem Schleifer (9.1) sowie einer auf einer Leiterplatte (10) aufgedruckte Potentiometerbahn ein achsenloses Potentiometer bildet.

9. Bedienelement nach einem oder mehreren der Ansprüche 1 bis 4, **dadurch gekennzeichnet, dass**
das Mittel (17) eine elektrisch leitende Bahn ist, die mit den hinter der Frontblende (2) direkt angebrachten Sensor, der aus elektrischen Bahnen (21,22) besteht, eine drehveränderliche Kapazität bilden.

10. Bedienelement nach einem oder mehreren der vorgenannten Ansprüche 1 bis 8, **dadurch gekennzeichnet, dass** die Frontblende (2) durchbruchsfrei ist.

11. Bedienelement nach einem oder mehreren der vorgenannten Ansprüche 1 bis 9, **dadurch gekennzeichnet, dass** die Frontblende (2) aus Glas, Kunststoff oder einem Glasüberzug oder einem Kunststoffüberzug besteht.

12. Bedienelement nach einem oder mehreren der Ansprüche 1 bis 5, **dadurch gekennzeichnet, dass** die Frontblende (2) aus Metall besteht.

13. Bedienelement nach einem oder mehreren der Ansprüche 1 bis 12, **dadurch gekennzeichnet, dass** das Bedienelement (1) modular aufgebaut und die Funktion individuell programierbar ist.

## Claims

1. Operating element for electrically operated appliances having a front panel, comprising an upper part (11) and a holder (12) fixed thereto, **characterized in that** a carrier (4, 23) for accommodating the holder (12, 24) of the operating element (1), which can be plugged on and detached from the holder (12, 24) again, is adhesively bonded to the front panel (2), which has no apertures,
means (14, 15, 16, 17) for indirect transmission of actuation are fitted in the operating element (1), and
sensors (5, 6, 7, 8, 9, 21, 22) for indirect evaluation of actuation are arranged behind the front panel (2) and, with the means (14, 15, 16, 17) in the operating element (1), form a constructionally and electrically interacting unit.

2. Operating element according to Claim 1, **characterized in that** the carrier (4) is a plastic carrier.

3. Operating element according to Claim 1 or 2, **characterized in that** the operating element (1) is mounted centrally in the carrier (4) by means of the holder (12).

4. Operating element according to Claim 1 or 2, **characterized in that** the operating element (1) is mounted on the outside of the carrier (24) by means of the holder (23).

5. Operating element according to one or more of Claims 1 to 4, **characterized in that** the means (14) is at least one hammer-like element, to which at least one piezoelectric sensor (5) adjacent behind the front panel (2) is assigned.

6. Operating element according to one or more of Claims 1 to 4, **characterized in that** the means (15) is a colour-coded track, which is arranged on the side facing the front panel (2), at least one optoelectronic sensor (7, 8) being fitted behind the front panel (2).

7. Operating element according to one or more of Claims 1 to 4, **characterized in that** the means (16) is a magnetized element which, with a Hall sensor (26) located behind the front panel (2) forms a shaftless potentiometer.

8. Operating element according to one or more of Claims 1 to 4, **characterized in that** the means (16) is a magnetized element which, with a magnet (9) located behind the front panel (2), a wiper (9.1) and a potentiometer track printed on a printed circuit board (10), forms a shaftless potentiometer.

9. Operating element according to one or more of Claims 1 to 4, **characterized in that** the means (17) is an electrically conductive track which, with the sensor which is fitted directly behind the front panel (2) and comprises electric tracks (21, 22), forms a rotationally variable capacitor.

10. Operating element according to one or more of the above-mentioned Claims 1 to 8, **characterized in that** the front panel (2) has no apertures.

11. Operating element according to one or more of the aforementioned Claims 1 to 9, **characterized in that** the front panel (2) consists of glass, plastic or a glass covering or plastic covering.

12. Operating element according to one or more of Claims 1 to 5, **characterized in that** the front panel (2) consists of metal.

13. Operating element according to one or more of Claims 1 to 12, **characterized in that** the operating element (1) is of modular construction and the function can be programmed individually.

## Revendications

1. Elément de commande pour appareils contrôlables électriquement, comportant un écran frontal, présentant une partie supérieure (11) et une embase (12) fixée dessus, **caractérisé en ce qu'**un support (4, 23) destiné à recevoir l'embase (12, 24) de l'élément de commande pouvant être emboîté et de nouveau détaché de l'embase (12, 24) est collé sur l'écran frontal (2) exempt de percée,
que sont installés, dans l'élément de commande (1), des moyens (14, 15, 16, 17) de transmission indirecte d'actionnement et
que, derrière l'écran frontal (2), sont disposés des capteurs (5, 6, 7, 8, 9, 21, 22) pour l'exploitation directe de l'actionnement, qui forment, avec les moyens (14, 15, 16, 17) prévus dans l'élément de commande (1), une unité de construction coopérant au niveau électrique.

2. Elément de commande selon la revendication 1,
**caractérisé en ce que** le support (4) est un support en matière plastique.

3. Elément de commande selon la revendication 1 ou 2, **caractérisé en ce que** l'élément de commande (1) s'appuie dans le centre du support (4) par le biais de l'embase (12).

4. Elément de commande selon la revendication 1 ou 2, **caractérisé en ce que** l'élément de commande (1) s'appuie sur l'extérieur du support (24) par le biais de l'embase (23).

5. Elément de commande selon l'une quelconque ou plusieurs des revendications 1 à 4, **caractérisé en ce que** le moyen (14) est au moins un élément en forme de marteau auquel est associé au moins un capteur piézoélectrique (5) posé derrière l'écran frontal (2).

6. Elément de commande selon l'une quelconque ou plusieurs des revendications 1 à 4, **caractérisé en ce que** le moyen (15) est un conducteur à code couleur qui est disposé sur le côté tourné vers l'écran frontal (2), au moins un capteur optoélectronique (7, 8) étant disposé derrière l'écran frontal (2).

7. Elément de commande selon l'une quelconque ou plusieurs des revendications 1 à 4, **caractérisé en ce que** le moyen (16) est un élément magnétisé qui forme, avec un capteur à effet Hall (26) se trouvant derrière l'écran frontal (2), un potentiomètre sans axe.

8. Elément de commande selon l'une quelconque ou plusieurs des revendications 1 à 4, **caractérisé en ce que** le moyen (16) est un élément magnétisé qui forme, avec un aimant (9) se trouvant derrière l'écran frontal (2), un curseur (9.1) ainsi qu'un conducteur de potentiomètre imprimé sur une carte de circuits imprimés (10), un potentiomètre sans axe.

9. Elément de commande selon l'une quelconque ou plusieurs des revendications 1 à 4, **caractérisé en ce que** le moyen (17) est un conducteur d'électricité qui forme, avec le capteur installé directement derrière l'écran frontal (2), qui consiste en conducteurs électriques (21, 22), une capacité à rotation variable.

10. Elément de commande selon l'une quelconque ou plusieurs des revendications 1 à 8, **caractérisé en ce que** l'écran frontal (2) est exempt de percée.

11. Elément de commande selon l'une quelconque ou plusieurs des revendications 1 à 9, **caractérisé en ce que** l'écran frontal (2) est composé de verre, de matière plastique ou d'un revêtement en verre ou d'un revêtement en matière plastique.

12. Elément de commande selon l'une quelconque ou plusieurs des revendications 1 à 5, **caractérisé en ce que** l'écran frontal (2) est composé de métal.

13. Elément de commande selon l'une quelconque ou plusieurs des revendications 1 à 12, **caractérisé en ce que** l'élément de commande (1) a une structure modulaire et que son fonctionnement est programmable individuellement.
